# FASCICULE DE BREVET EUROPEEN

(11) **EP 2 932 353 B1**
(45) Date de publication et mention de la délivrance du brevet: **14.04.2021**
(21) Numéro de dépôt: 13803092.9
(22) Date de dépôt: 21.11.2013
(51) Int. Cl.: G06F 3/01, B60K 37/06

(54) **ACTIONNEUR POUR MODULE D'INTERFACE TACTILE À RETOUR HAPTIQUE**
AKTUATOR FÜR EIN TAKTILES SCHNITTSTELLENMODUL MIT HAPTISCHER RÜCKMELDUNG
ACTUATOR FOR A TACTILE INTERFACE MODULE WITH HAPTIC FEEDBACK

(30) Priorité: 13.12.2012 FR 1203411
(43) Date de publication de la demande: 21.10.2015
(73) Titulaire: DAV, 94046 Créteil Cedex (FR)
(72) Inventeur: TISSOT, Jean-Marc, F-94046 Créteil Cedex (FR); AUBRY, Anthony, F-94046 Créteil Cedex (FR)
(74) Mandataire: Pothmann, Karsten
(86) Numéro de dépôt international: PCT/FR2013/000302
(87) Numéro de publication internationale: WO 2014/091090

(56) Documents cités:
- FR-A1- 2 966 613
- US-A- 6 118 435
- US-A1- 2011 227 849

## Description

La présente invention concerne un actionneur pour un module d'interface tactile, en particulier pour un véhicule automobile, permettant notamment de transmettre un retour haptique à un utilisateur, tel qu'un retour vibratoire.

Lorsqu'un utilisateur exerce une pression sur la surface tactile d'un module d'interface tactile à retour tactile, on peut mesurer la pression appliquée et/ou déterminer la localisation de l'endroit où la pression est exercée. Dans ce cas, un appui de l'utilisateur est par exemple associé à la sélection d'une commande.

En outre, pour signaler par exemple à l'utilisateur que sa commande a bien été prise en compte, notamment en conduite de nuit ou lors d'une manipulation en aveugle, un retour haptique est généré de manière à permettre à l'utilisateur de rester concentré sur la route.

Pour ce faire, il est des modules de commande à retour haptique comportant des actionneurs, tels que des actionneurs électromagnétiques, comme décrit par exemple dans le document FR2966613 A1, reliés au module d'interface pour transmettre un mouvement de vibration, de manière que l'utilisateur perçoive un retour haptique l'informant que sa commande a bien été prise en compte Un autre état de l'art est représenté par le document US6118435 A qui décrit un module d'interface tactile à retour haptique comprenant un ressort hélicoïdal latéral disposé autour d'éléments de fixation pour permettre le mouvement de haut en bas d'un noyau mobile.

Ces actionneurs électromagnétiques comportent une bobine et un ou plusieurs aimants mobiles en translation par rapport à la bobine. En alimentant la bobine, les aimants sont mis en mouvement, et ce mouvement est transmis à la surface tactile.

À cet effet, l'invention a pour objet un actionneur pour module d'interface tactile à retour haptique, tel que défini par la revendication indépendante jointe à laquelle il convient de se référer.

On réalise ainsi un actionneur pour module d'interface tactile à retour haptique avec un faible encombrement.

L'actionneur peut en outre comporter une ou plusieurs caractéristiques, prises séparément ou en combinaison parmi celles qui suivent.

Les moyens de fixation forment un guide du mouvement du noyau mobile, ce qui permet de ne pas avoir à implémenter de guides additionnels pour ledit mouvement.

Les moyens élastiques comportent des ressorts hélicoïdaux enroulés autour des éléments de fixation, les ressorts hélicoïdaux ayant une forme tubulaire qui entoure avantageusement les éléments de fixation.

Les moyens élastiques comportent des lames ressort qui elles même comportent des perçages, les éléments de fixation passant par lesdits perçages, en particulier pour des modes de réalisation plus aplatis.

Les moyens élastiques comportent un matériau élastique tel que de l'uréthane, un polymère expansé, un polymère réticulé ioniquement, ou du caoutchouc, potentiellement moins chers que les éléments métalliques précédents.

Les moyens élastiques sont précontraints en compression, toujours dans l'optique d'un mode de réalisation plus aplati.

Les éléments de fixation comportent des vis, qui permettent un ajustage ou serrage des dimensions et/ou de la raideur des éléments élastiques.

Les éléments de fixation comportent des rivets potentiellement moins chers.

Les éléments de fixation comportent des tiges plastiques bouterollées, sans métal, et potentiellement encore moins chers.

Le noyau mobile comporte au moins un aimant, et le châssis comporte une bobine de sorte que le châssis fixe reçoit l'élément requérant une alimentation.

Le châssis comporte un corps portant une partie des moyens d'actionnement et un fond, formant support, et en ce que le corps et le fond comportent une fixation provisoire, et sont assemblés par les éléments de fixation. Cette fixation provisoire permet lors de l'assemblage , le transport du produit semi-fini et d'avoir un composant intègre.

La fixation provisoire comporte un clippage par coopération de forme, fixation provisoire simple et peu chère.

L'invention a aussi pour objet le module d'interface tactile à retour haptique associé, caractérisé en ce qu'il comporte un actionneur tel que précédemment décrit.

D'autres caractéristiques et avantages de l'invention ressortiront de la description suivante, donnée à titre d'exemple et sans caractère limitatif, en regard des dessins annexés sur lesquels :
- la figure 1 montre schématiquement une vue en coupe transversale d'un module d'interface selon un mode de réalisation dit "suspendu", où l'actionneur forme un bloc isolé, fixé à la surface tactile à mettre en mouvement;
- la figure 2 montre schématiquement le module d'interface de la figure 1 en vue de profil,
- la figure 3 montre un mode de réalisation alternatif de module d'interface, en vue de profil.

Sur toutes les figures, les mêmes éléments portent les mêmes numéros de référence.

L'invention concerne un module d'interface tactile à retour haptique 1, par exemple pour un tableau de commande de véhicule automobile, ou encore pour une console centrale de véhicule automobile, permettant de commander des systèmes électriques ou électroniques du véhicule, et pouvant transmettre un retour haptique à un utilisateur ayant par exemple modifié ou sélectionné une commande de manière à assurer à l'utilisateur la prise en compte de la commande modifiée ou sélectionnée.

Le module d'interface comprend une surface tactile 3, par exemple utilisant une technologie capacitive, ou résistive intégrée sur les écrans tactiles ou touchpad voire de simples zones type bouton, sliders utilisant les technologies capacitives ou résistives (dite FSR : Force Sensing Resistor) pour détecter la localisation du doigt d'un utilisateur (et additionnellement l'effort dans le cas d'une technologie résistive) sur une position de sa surface correspondant à une commande. Il est aussi possible d'utiliser une dalle tactile, transparente et superposée à un écran d'affichage, fonctionnant par exemple par détection des ondes de surface.

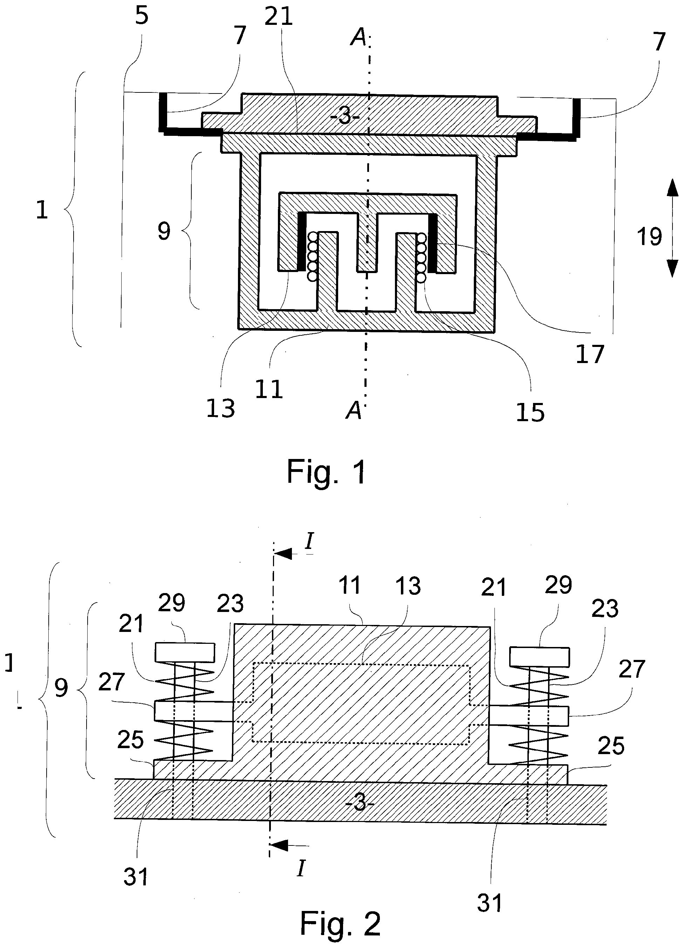

Sur la figure 1, la surface tactile est liée de manière flottante au bâti 5 du module d'interface tactile 1. La liaison entre la surface 3 et le bâti 5 se fait par une liaison 7 de type membrane semi-rigide, ou tout autre moyen de fixation permettant des mouvements limités, notamment en vibration le long de l'axe perpendiculaire à la surface tactile 3.

La surface tactile 3 est reliée à un actionneur 9 qui provoque le retour haptique lors de la détection de l'appui de l'utilisateur. Cet actionneur 9 comporte d'une part un châssis 11, rendu solidaire de la surface tactile 3, et un noyau mobile 13 coopérant avec le châssis.

Le noyau mobile 13, logé dans le châssis 11 est mis en mouvement entre des positions extrémales par des moyens d'actionnement électromagnétiques 15, 17. Lors de ce mouvement de va-et-vient, le noyau alterne des phases d'accélération et de décélération, lors desquelles le noyau mobile 13 entraîne la mise en mouvement de la surface tactile 3, et donc le retour haptique.

Pour réaliser les moyens d'actionnement électromagnétiques 15, 17, le châssis 11 porte une bobine 15 pouvant fournir un champ magnétique et le noyau mobile 13 porte au moins un aimant 17, préférentiellement plusieurs, disposés au plus près de la bobine 15, et est libre en translation le long de l'axe *A-A.*

Il est également possible de réaliser le montage inverse, la bobine 15 étant alors solidaire du noyau mobile 13 et le ou les aimants 17 étant alors solidaires du châssis 11.

La figure 1 montre un mode de réalisation d'un actionneur dit "suspendu". Par suspendu, on entend que l'actionneur 9 n'est pas relié au bâti 5 du module d'interface tactile 1, et le châssis 11 de l'actionneur est solidaire de la surface tactile 3.

Le noyau mobile 13 présente une section en E dont la branche centrale est enchâssée dans une portion à section en U correspondante du châssis 11.

La figure 2 montre l'actionneur de la figure 1 schématiquement représenté de profil, de sorte que des moyens élastiques 21 et des éléments de fixation 23 dudit actionneur 9, préalablement non représentés sont visibles.

En figure 2 est notamment représentée la ligne *I-I* selon laquelle la coupe de la figure 1 à été effectuée. En particulier, ladite coupe est transversale, et les moyens élastiques 21 et les éléments de fixation 23, qui sont situés aux extrémités longitudinales, sont donc invisibles en figure 1.

Sur la figure 2 on peut notamment voir que le châssis 11 comporte à ses extrémités latérales des languettes extrémales 25, percées en leur centre. Le noyau mobile 13 comporte lui aussi des languettes extrémales 27, percées en leur centre, disposées de sorte que les perçages des languettes 25, 27 portées respectivement par le châssis 11 et le noyau mobile 13 soient alignés selon l'axe *A-A.*

Les perçages des languettes 25, 27 accueillent les éléments de fixation 23, ici schématiquement représentés sous forme de vis, qui forment des guides en translation du noyau mobile 13. On peut en alternative utiliser des guides dédiés de type queue d'aronde ou glissière rectangulaire entre la pièce 13 et le bâti 11 pour faire cette fonction.

En particulier, les languettes extrémales 27 portées par le noyau mobile 13 coulissent le long du corps des vis formant les éléments de fixation lors du mouvement dudit noyau mobile 13.

Les moyens élastiques 21, ici des ressorts hélicoïdaux sont disposés autour des éléments de fixation 23, avec un ressort hélicoïdal 21 de part et d'autre des languettes extrémales 27 du noyau mobile 13. En particulier, les ressorts hélicoïdaux 21 sont ici enroulés autour des vis formant éléments de fixation 23.

En outre ou en alternative, les moyens élastiques peuvent comporter des lames ressort qui elles même comportent des perçages, les éléments de fixation 23 passant par lesdits perçages, si l'espace est limité le long des éléments de fixation 23.

En outre les moyens élastiques 21 peuvent comporter un matériau élastique tel que de l'uréthane, un polymère expansé, un polymère réticulé ioniquement, ou du caoutchouc, par exemple en forme d'anneau ou de tube entourant les éléments de fixation 23.

Une extrémité de chaque vis 23 comporte une tête 29 de diamètre plus important, l'autre extrémité 31 étant vissée dans un préperçage d'un support de la surface tactile 3.

La tête de chaque vis 23 retient avantageusement l'un des ressorts hélicoïdaux 21, et le précontraint en compression contre la languette extrémale 27 correspondante du noyau mobile 13. Le ressort hélicoïdal 21 situé en vis-à-vis par rapport à la languette extrémale 27 du noyau mobile 13 est, lui, précontraint entre la languette 27 et la dalle portant la surface tactile 3.

Un autre mode de réalisation dans lequel les moyens élastiques 21 sont précontraints en extension est toutefois aussi envisageable.

D'autres modes de réalisation sont aussi envisagés dans lesquels les éléments de fixation 23 comportent des rivets, emboutis à l'assemblage, ou des tiges plastique bouterollées à chaud à l'assemblage.

Les moyens élastiques 21 définissent ainsi dans la présente invention une position de repos flottante du noyau mobile, en l'absence d'actionnement par la bobine 15 et les aimants 17 formant les moyens d'actionnement. Cette position flottante permet un actionnement plus efficace à même énergie fournie.

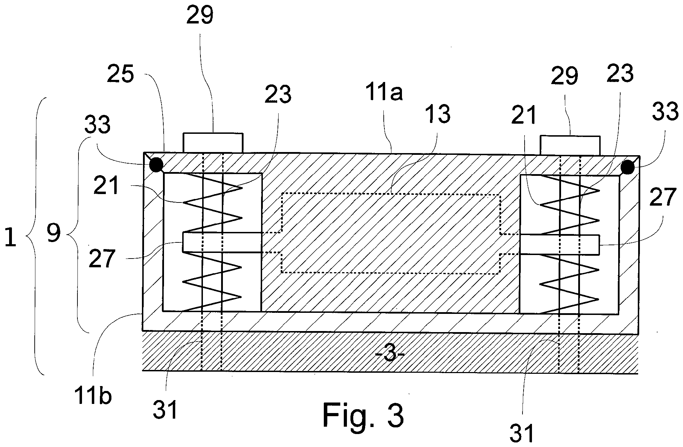

La figure 3 montre un mode de réalisation alternatif de module d'interface 1.

Le mode de réalisation de la figure 3 diffère de celui de la figure 2 en ce que le châssis 11 est composé d'une pluralité de pièces, ici en particulier deux.

Le châssis comporte ici un corps 11a, comportant notamment la portion à section en U qui porte la bobine 15 et les languettes extrémales 25, et un fond 11b, qui forme la surface d'appui sur la dalle de la surface tactile 3.

Le fond 11b peut aussi comporter des parois latérales (non représentées) pour former une enceinte au moins par endroits, enceinte que les languettes extrémales 25 du corps 11a viennent fermer. L'enceinte ainsi obtenue protège notamment l'actionneur 9 des éléments extérieurs tels que la poussière.

Le corps 11a et le fond 11b du châssis sont reliés par une fixation provisoire 33, par exemple par coopération de forme de type clippage.

De la sorte, le corps 11a et le fond 11b peuvent être manipulés séparément, puis préassemblés au moyen de la fixation provisoire 33, avant d'être définitivement assemblés par les moyens de fixation 23 qui maintiennent définitivement ledit corps 11a et le fond 11b ensemble.

En particulier, le corps 11a et le fond 11b peuvent alors être conçus de sorte à être obtenus par moulage en moins d'étapes, et/ou en étapes simplifiées, par exemple sans nécessiter de contre-dépouille, découpe ou fraisage ultérieur. En outre, le corps 11a est potentiellement plus aisément manipulable lors du montage de la bobine 15, par exemple par enroulement automatisé de câble métallique autour de la portion à section en U.

La fixation provisoire 33 permet un préassemblage du châssis 11, éventuellement avec le noyau 13 préalablement inséré à sa position, de sorte à obtenir un module semi-fini aisément manipulable. Ainsi, le préassemblage et le montage et l'assemblage définitif que ledit montage implique peuvent être effectués à des postes différents, potentiellement éloignés géographiquement.

L'invention permet ainsi d'obtenir un actionneur 9 plus compact, d'assemblage plus facile donc potentiellement moins coûteux. En outre, les moyens élastiques 21 et le serrage des éléments de fixation 23 permet de réduire significativement le jeu des pièces impliquées.

## Revendications

1. Actionneur (9) pour module d'interface (1) tactile à retour haptique, destiné à être relié à une surface tactile (3) apte à détecter un appui d'un utilisateur, et apte à générer un retour haptique en fonction d'un appui détecté et comprenant :
- un châssis (11),
- un noyau mobile (13) coopérant avec le châssis (11), destiné à être entraîné en mouvement entre des positions extrémales pour générer le retour haptique,
- des moyens d'actionnement électromagnétiques (15, 17) portés par le châssis (11) et le noyau mobile (13) pour entraîner en mouvement le noyau mobile (13) alternant des phases d'accélération et de décélération et entraînant la mise en mouvement de la surface tactile,
- des éléments de fixation (23), destinés à relier l'actionneur à la surface tactile (3),
- des moyens élastiques (21) définissant une position de repos du noyau mobile (13) en l'absence d'entraînement par les moyens d'actionnement (15, 17), **caractérisé en ce que** les moyens élastiques (21) comprennent des premier et second moyens élastiques (21) disposés autour desdits éléments de fixation (23) de sorte à définir une position de repos flottante du noyau mobile (13).

2. Actionneur selon la revendication 1, **caractérisé en ce que** les éléments de fixation (23) forment un guide du mouvement du noyau mobile (13).

3. Actionneur selon la revendication 1 ou 2, **caractérisé en ce que** les moyens élastiques (21) comportent des ressorts hélicoïdaux enroulés autour des éléments de fixation (23)

4. Actionneur selon l'une des revendications précédentes, **caractérisé en ce que** les moyens élastiques (21) comportent des lames ressort qui elles même comportent des perçages, les éléments de fixation (23) passant par lesdits perçages.

5. Actionneur selon l'une des revendications précédentes, **caractérisé en ce que** les moyens élastiques (21) comportent un matériau élastique tel que de l'uréthane, un polymère expansé, un polymère réticulé ioniquement, ou du caoutchouc.

6. Actionneur selon l'une des revendications précédentes, **caractérisé en ce que** les moyens élastiques (21) sont précontraints en compression.

7. Actionneur selon l'une des revendications précédentes, **caractérisé en ce que** les éléments de fixation (23) comportent des vis.

8. Actionneur selon l'une des revendications précédentes, **caractérisé en ce que** les éléments de fixation (23) comportent des rivets.

9. Actionneur selon l'une des revendications précédentes, **caractérisé en ce que** les éléments de fixation (23) comportent des tiges plastiques bouterollées.

10. Actionneur selon l'une des revendications précédentes, **caractérisé en ce que** le noyau mobile (13) comporte au moins un aimant (17), et le châssis (11) comporte une bobine (15).

11. Actionneur selon l'une des revendications précédentes, **caractérisé en ce que** le châssis (11) comporte un corps (11a) portant une partie des moyens d'actionnement (15) et un fond (11b), formant support, et **en ce que** le corps (11a) et le fond (11b) comportent une fixation provisoire (33), assemblés par les éléments de fixation (23).

12. Actionneur selon la revendication 11, **caractérisé en ce que** la fixation provisoire comporte un clippage par coopération de forme.

13. Module d'interface (1) tactile à retour haptique comprenant une surface tactile (3) apte à détecter un appui d'un utilisateur, **caractérisé en ce qu'**il comporte un actionneur (9) selon l'une des revendications précédentes, ledit actionneur (9) étant apte à générer un retour haptique en fonction d'un appui détecté.

## Patentansprüche

1. Aktuator (9) für ein taktiles Schnittstellenmodul (1) mit haptischer Rückmeldung, der dazu bestimmt ist, mit einer taktilen Oberfläche (3) verbunden zu sein, die in der Lage ist, eine Berührung eines Benutzers zu detektieren, und der in der Lage ist, in Abhängigkeit von einer detektierten Berührung eine haptische Rückmeldung zu erzeugen, und der Folgendes umfasst:
- einen Rahmen (11),
- einen beweglichen Kern (13), der mit dem Rahmen (11) zusammenwirkt und dazu bestimmt ist, zwischen Endpositionen in Bewegung versetzt zu werden, um die haptische Rückmeldung erzeugen,
- elektromagnetische Betätigungsmittel (15, 17), die von dem Rahmen (11) und dem beweglichen Kern (13) getragen werden, um den beweglichen Kern (13) in Bewegung zu versetzen, wobei sich Beschleunigungsphasen und Verzögerungsphasen abwechseln und die taktile Oberfläche in Bewegung versetzt wird,
- Befestigungselemente (23), die dazu bestimmt sind, den Aktuator mit der taktilen Oberfläche (3) zu verbinden,
- elastische Mittel (21) die eine Ruheposition des beweglichen Kerns (13) bei fehlender Bewegung durch die Betätigungsmittel (15, 17) definieren, **dadurch gekennzeichnet, dass** die elastischen Mittel (21) erste und zweite elastische Mittel (21) umfassen, die um die Befestigungselemente (23) herum so angeordnet sind, dass sie eine schwimmende Ruheposition des beweglichen Kerns (13) definieren.

2. Aktuator nach Anspruch 1, **dadurch gekennzeichnet, dass** die Befestigungselemente (23) eine Führung für die Bewegung des beweglichen Kerns (13) ausbilden.

3. Aktuator nach Anspruch 1 oder 2, **dadurch gekennzeichnet, dass** die elastischen Mittel (21) Schraubenfedern aufweisen, die um die Befestigungselemente (23) gewickelt sind.

4. Aktuator nach einem der vorangehenden Ansprüche, **dadurch gekennzeichnet, dass** die elastischen Mittel (21) Federblätter aufweisen, die ihrerseits Bohrungen aufweisen, wobei die Befestigungselemente (23) durch die Bohrungen verlaufen.

5. Aktuator nach einem der vorangehenden Ansprüche, **dadurch gekennzeichnet, dass** die elastischen Mittel (21) ein elastisches Material wie Urethan, ein geschäumtes Polymer, ein ionisch vernetztes Polymer oder Gummi aufweisen.

6. Aktuator nach einem der vorangehenden Ansprüche, **dadurch gekennzeichnet, dass** die elastischen Mittel (21) auf Druck vorgespannt sind.

7. Aktuator nach einem der vorangehenden Ansprüche, **dadurch gekennzeichnet, dass** die Befestigungselemente (23) Schrauben aufweisen.

8. Aktuator nach einem der vorangehenden Ansprüche, **dadurch gekennzeichnet, dass** die Befestigungselemente (23) Niete aufweisen.

9. Aktuator nach einem der vorangehenden Ansprüche, **dadurch gekennzeichnet, dass** die Befestigungselemente (23) Döpperstangen aus Kunststoff aufweisen.

10. Aktuator nach einem der vorangehenden Ansprüche, **dadurch gekennzeichnet, dass** der bewegliche Kern (13) zumindest einen Magneten (17) aufweist und der Rahmen (11) eine Spule (15) aufweist.

11. Aktuator nach einem der vorangehenden Ansprüche, **dadurch gekennzeichnet, dass** der Rahmen (11) einen Körper (11a), der einen Teil der Betätigungsmittel (15) trägt, und einen Boden (11b), der eine Stütze bildet, aufweist und dass der Körper (11a) und der Boden (11b) eine provisorische Befestigung (33) aufweisen und durch die Befestigungselemente (23) zusammengefügt sind.

12. Aktuator nach Anspruch 11, **dadurch gekennzeichnet, dass** die provisorische Befestigung eine formschlüssige Clipverbindung aufweist.

13. Taktiles Schnittstellenmodul (1) mit haptischer Rückmeldung, umfassend eine taktile Oberfläche (3), die in der Lage ist, eine Berührung eines Benutzers zu detektieren, **dadurch gekennzeichnet, dass** es einen Aktuator (9) nach einem der vorangehenden Ansprüche aufweist, wobei der Aktuator (9) in der Lage ist, in Abhängigkeit von einer detektierten Berührung eine haptische Rückmeldung zu erzeugen.

## Claims

1. Actuator (9) for a touch interface module (1) with haptic feedback, intended to be linked to a touch surface (3) capable of detecting a contact from a user, and capable of generating haptic feedback as a function of a detected contact and comprising:
- a frame (11),
- a movable core (13) cooperating with the frame (11), intended to be driven in motion between extreme positions to generate the haptic feedback,
- electromagnetic actuation means (15, 17) borne by the frame (11) and the movable core (13) for driving the motion of the movable core (13) alternating phases of acceleration and of deceleration and causing the touch surface to be set in motion,
- fixing elements (23), intended to link the actuator to the touch surface (3),
- elastic means (21) defining a rest position of the movable core (13) in the absence of being driven by the actuation means (15, 17),
**characterized in that** the elastic means (21) comprise first and second elastic means (21) disposed around said fixing elements (23) so as to define a floating rest position of the movable core (13) .

2. Actuator according to Claim 1, **characterized in that** the fixing elements (23) form a guide for the motion of the movable core (13).

3. Actuator according to Claim 1 or 2, **characterized in that** the elastic means (21) comprise helical springs wound around the fixing elements (23).

4. Actuator according to one of the preceding claims, **characterized in that** the elastic means (21) comprise spring blades which themselves comprise piercings, the fixing elements (23) passing through said piercings.

5. Actuator according to one of the preceding claims, **characterized in that** the elastic means (21) comprise an elastic material such as urethane, an expanded polymer, an ionically cross-linked polymer, or rubber.

6. Actuator according to one of the preceding claims, **characterized in that** the elastic means (21) are prestressed in compression.

7. Actuator according to one of the preceding claims, **characterized in that** the fixing elements (23) comprise screws.

8. Actuator according to one of the preceding claims, **characterized in that** the fixing elements (23) comprise rivets.

9. Actuator according to one of the preceding claims, **characterized in that** the fixing elements (23) comprise headed plastic rods.

10. Actuator according to one of the preceding claims, **characterized in that** the movable core (13) comprises at least one magnet (17), and the frame (11) comprises a coil (15).

11. Actuator according to one of the preceding claims, **characterized in that** the frame (11) comprises a body (11a) bearing a part of the actuation means (15) and a bottom (11b) forming a support, and **in that** the body (11a) and the bottom (11b) comprise a provisional fixing (33), assembled by the fixing elements (23) .

12. Actuator according to Claim 11, **characterized in that** the provisional fixing comprises clipping by form-fitting.

13. Touch interface module (1) with haptic feedback comprising a touch surface (3) capable of detecting a contact from a user, **characterized in that** it comprises an actuator (9) according to one of the preceding claims, said actuator (9) being capable of generating haptic feedback as a function of a detected contact.
